# EUROPEAN PATENT APPLICATION

(11) **EP 4 804 531 A1**
(43) Date of publication of application: **09.09.2026**
(21) Application number: 25162261.9
(22) Date of filing: 07.03.2025
(51) Int. Cl.: H04N 19/597, H04N 13/178, H04N 19/70

(54) **GENERATION AND PROCESSING OF VIDEO DATA SIGNAL**

(71) Applicant: Koninklijke Philips N.V., 5656 AE Eindhoven (NL)
(72) Inventor: YUAN, Zhaorui, Eindhoven (NL); KROON, Bart, Eindhoven (NL); VAREKAMP, Christiaan, 5656AG Eindhoven (NL)
(74) Representative: Philips Intellectual Property & Standards

(57) **Abstract**

A video apparatus comprises a receiver (201) receiving video data for a three dimensional scene. A generator (203) generates video frames from the video data where each video frame comprises a plurality of independently decodable image regions, such as video tiles. A metadata generator (205) generates metadata including an indication of a set of scene objects for the scene. A video data signal generator (207) generates a video data signal comprising the video frames and the metadata. The metadata is generated to include at least one link indication where each link indication provides a linking of a first scene object to a set of independently decodable image regions. A complementary video apparatus may receive the video data signal and generate a modified video signal therefrom by selecting a subset of the independently decodable image regions based on the link indications and a set of the scene objects determined e.g. from a user input.

## Description

### FIELD OF THE INVENTION

The invention relates to a video data signal and the generation and processing of such, and in particular, but not exclusively, to generation and/ or processing of an object encoded video data signal.

### BACKGROUND OF THE INVENTION

The variety and range of image and video applications have increased substantially in recent years with new services and ways of utilizing and consuming video being continuously developed and introduced.

For example, one service being increasingly popular is the provision of image sequences in such a way that the viewer is able to actively and dynamically interact with the system to change parameters of the rendering. A very appealing feature in many applications is the ability to change the effective viewing position and viewing direction of the viewer, such as for example allowing the viewer to move and "look around" in the scene being presented.

Such a feature can specifically allow an eXtended Reality (XR)/ Virtual Reality (VR)/Augmented Reality (AR) experience to be provided to a user. This may allow the user to e.g. (relatively) freely move about in a virtual environment and dynamically change his position and where he is looking. Typically, such virtual reality applications are based on a three-dimensional model of the scene with the model being dynamically evaluated to provide the specific requested view. This approach is well known from e.g. game applications, such as in the category of first person shooters, for computers and consoles.

Recently an approach known as object video coding has been proposed where a video representation of a scene may be represented (at least partly) by independently coded video objects representing scene objects. Object video encoding is very promising for the future of video as it tends to provide more intelligent and adaptive video processing, such as better video analytics, enhanced augmented reality experiences, etc.

However, existing video encoding, including object video encoding, tends to be suboptimal and to not provide ideal performance in all applications and scenarios. In particular, existing approaches tend to be undesirably complex and/or resource demanding and/or to result in suboptimal video quality and/or data rate.

Hence, an improved approach would be advantageous. In particular, an approach for generating and/ or processing a video signal/data that allows improved operation, increased flexibility, an improved extended reality experience, reduced data rates, increased efficiency, reduced complexity, facilitated implementation, reduced resource usage, increased image/video quality, improved scene/video object support, improved data rate versus image quality trade-off and/or processing demand, and/or improved performance and/or operation would be advantageous.

### SUMMARY OF THE INVENTION

Accordingly, the invention seeks to preferably mitigate, alleviate or eliminate one or more of the above mentioned disadvantages singly or in any combination.

According to a first aspect of the invention, there is provided video apparatus comprising: a receiver arranged to receive video data for a three dimensional scene; a generator arranged to generate a plurality of video frames from the video data, each video frame comprising a plurality of independently decodable image regions; a metadata generator arranged to generate metadata, the metadata including an indication of a set of scene objects for the three dimensional scene; a video data signal generator arranged to generate a video data signal comprising the plurality of video frames and the metadata; wherein the metadata generator is further arranged to include at least one link indication, each link indication of the at least one link indications linking a scene object to a set of independently decodable image regions of the plurality of independently decodable image regions.

The approach may provide an improved video data signal in many embodiments and applications, and may typically provide improved support for object oriented video coding. The approach may in many embodiments provide a video data signal with information that may support an improved, more efficient, reduced complexity, reduced resource etc. object based processing. The approach may in particular support and/or facilitate efficient selection and access to relevant or desired data of the video data signal. It may for example facilitate bitstream transformation to reduce data rate, rendering of the 3D scene with selected objects etc.

The modified video data signal may be a display signal, e.g. a 2D display signal for a 2D display. The independently decodable image regions may be tiles of the video frames. The independently decodable image regions may be regions of pixels of the video frames. Each pixel may provide one or more image values. The regions may in some embodiments be rectangular regions.

Scene objects may be instantiations of objects of the scene. Each scene object may belong to a category and/or be associated with a semantic label. Each scene object may have a semantic link/association.

Each link indication may provide a link between at least one object (identity) and at least one independently decodable image region/tile (identity). In many cases, each link indication may provide a link between one object (identity) and one independently decodable image region/tile (identity). A link indication may provide a link from one object (identity) to a plurality of independently decodable image region identities.

According to an optional feature of the invention, the video data signal generator is arranged to include the at least one link indication in a Supplemental Enhancement Information data field of the video data signal.

This may be particularly advantageous in many scenarios and embodiments. It may allow an improved video data signal to be generated which may provide improved support for e.g. object oriented video coding and/or processing.

A Supplemental Enhancement Information data field of the video data signal may be a Supplemental Enhancement Information message. A Supplemental Enhancement Information data field/message may be a collection of supplemental data/information that is not required/necessary for the video frames of the video data signal to be decoded. Decoding of the video frames of the video data signal may be possible without considering data included in a Supplemental Enhancement Information data field/message.

According to an optional feature of the invention, the video data signal generator is arranged to include the at least one link indication in a Network Abstraction Layer, NAL,unit.

This may be particularly advantageous in many scenarios and embodiments. It may allow an improved video data signal to be generated which may provide improved support for e.g. object oriented video coding and/or processing.

The link indications may be provided as new parameter sets of a NAL unit.

According to an optional feature of the invention, the video data signal is an MPEG Immersive Video, MIV, video data signal.

This may be particularly advantageous in many scenarios and embodiments. It may allow an improved MIV video data signal to be generated which may provide improved support for e.g. object oriented video coding and/or processing.

According to an optional feature of the invention, the video data signal is an MPEG Visual Volumetric Video-based Coding, V3C, video data signal.

This may be particularly advantageous in many scenarios and embodiments. It may allow an improved V3C video data signal to be generated which may provide improved support for e.g. object oriented video coding and/or processing.

According to an optional feature of the invention, the video frames include at least one two dimensional image video frame.

This may be particularly advantageous in many scenarios and embodiments. The video frames may be view images providing a two dimensional representation of the three dimensional scene from a viewpoint.

According to an optional feature of the invention, the video frames include at least one video atlas.

A video atlas may be a three-dimensional representation that compiles video frames captured from multiple viewpoints, optimizing data by removing redundant information and allowing for the separate encoding of individual objects. In video encoding, and specifically in volumetric video encoding, a video atlas may be a virtual frame that includes one or more video components (texture, geometry ...) of one or more channels (luma, chroma).

This may be particularly advantageous in many scenarios and embodiments. The video frames may be video atlases of an immersive/volumetric video representation of the three-dimensional scene.

According to an optional feature of the invention, the video data signal generator is arranged to generate the video data signal to include at least one indication indicative of whether a set of link indications provide link indications for link identities of a single video frame or provide link indications for link identities of a plurality of video frames.

This may be particularly advantageous in many scenarios and embodiments.

In some embodiments, the video data signal generator is arranged to generate the video data signal to include at least one dedicated sub-bitstream comprising video frame data and metadata for one video frame of the plurality of video frames and a common sub-bitstream comprising video frame data and metadata for more than one video frames of the plurality of video frames; and the metadata includes for at least a first link indication an indication of whether the first link indication is included in the at least one dedicated sub-bitstream or in the common sub-bitstream.

According to another aspect of the invention, there is provided a video apparatus comprising: a receiver arranged to receive a video data signal, the video data signal comprising: video data representing a three dimensional scene, the video data including: a plurality of video frames, each video frame comprising a plurality of independently decodable image regions, an indication of a set of scene objects for the three dimensional scene, and at least one link indication, each link indication of the at least one link indications linking a scene object of the three dimensional scene to a set of independently decodable image regions of the plurality of independently decodable image regions; an object selection circuit arranged to determine a set of the scene objects; a video signal generator arranged to generate a modified video signal from the video data, the generation of the second video signal including selecting a subset of the plurality of independently decodable image regions based on the set of the scene objects and the at least one link indication.

The approach may provide an improved processing of a video data signal in many embodiments and may typically provide improved processing for an object oriented video data signal. The approach may in many embodiments provide a processing which is improved, more efficient, reduced complexity, and/or reduced resource processing. The approach may in particular support and/or facilitate efficient selection and access to relevant or desired data of the video data signal. It may for example facilitate bitstream transformation to reduce data rate, rendering of the 3D scene with selected objects, etc.

The modified video signal may be a display signal, e.g. a 2D display signal for a 2D display. The modified video signal may be the same format as the input video data signal. The modified video signal may have a lower data rate than the video data signal. The modified video signal may be an MPEG Immersive Video, MIV, video data signal. The modified video signal may be an MPEG Visual Volumetric Video-based Coding video data signal.

In some embodiments, the object selection circuit comprises a user interface and is arranged to select the set of scene objects in response to a user input received from the user interface. In some embodiments, the video data signal and the modified video signal are volumetric video data signals. In some embodiments, the video data signal and the modified video signal are two-dimensional video data signals.

According to an optional feature of the invention, the video data signal and the modified video signal are object coded video signals.

This may be particularly advantageous in many scenarios and embodiments.

According to an optional feature of the invention, the video signal generator arranged to include a first independently decodable image regions in the modified video signal if at least one link indication indicates that the first independently decodable image region is linked to a scene object of the set of scene objects and to exclude the first independently decodable image regions from the modified video signal if no link indication indicates that the first independently decodable image region is linked to a scene object of the set of scene objects.

This may be particularly advantageous in many scenarios and embodiments.

According to another aspect of the invention, there is provided a method of generating a video data signal, the method comprising: receiving video data for a three dimensional scene; generating a plurality of video frames from the video data, each video frame comprising a plurality of independently decodable image regions; generating metadata including an indication of a set of scene objects for the three dimensional scene; and generating a video data signal comprising the plurality of video frames and the metadata; wherein generating the metadata comprises including at least one link indication in the metadata, each link indication of the at least one link indications linking a scene object to a set of independently decodable image regions of the plurality of independently decodable image regions.

According to another aspect of the invention, there is provided a method of generating a modified video signal, the method comprising: receiving a video data signal, the video data signal comprising: video data representing a three dimensional scene, the video data including: a plurality of video frames, each video frame comprising a plurality of independently decodable image regions, an indication of a set of scene objects for the three dimensional scene, and at least one link indication, each link indication of the at least one link indications linking a scene object of the three dimensional scene to a set of independently decodable image regions of the plurality of independently decodable image regions; determining a set of the scene objects; and generating the modified video signal from the video data, the generation of the second video signal including selecting a subset of the plurality of independently decodable image regions based on the set of the scene objects and the at least one link indication.

According to another aspect of the invention, there is provided a video data signal comprising: video data representing a three dimensional scene, the video data including plurality of video frames, each video frame comprising a plurality of independently decodable image regions; an indication of a set of scene objects for the three dimensional scene, and at least one link indication, each link indication of the at least one link indication linking a scene object of the three dimensional scene to a set of independently decodable image regions of the plurality of independently decodable image regions

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
FIG. 1 illustrates an example of a video distribution system;
FIG. 2 illustrates an example of some elements of a video apparatus in accordance with some embodiments of the invention;
FIG. 3 illustrates an example of some elements of a video apparatus in accordance with some embodiments of the invention;
FIG. 4 illustrates an example of some elements of a video apparatus in accordance with some embodiments of the invention; and
FIG. 5 illustrates some elements of a possible arrangement of a processor for implementing elements of an apparatus in accordance with some embodiments of the invention.

### DETAILED DESCRIPTION OF SOME EMBODIMENTS OF THE INVENTION

Visual capture and representation of a scene by video/image data has become increasingly important and ubiquitous, and in particular image data representing three dimensional properties of a scene are frequently used to provide additional services.

For example, virtual experiences allowing a user to move around in a 3D scene are becoming increasingly popular and services are being developed to satisfy such a demand. A particular example of a virtual reality experience is immersive video where a real world activity/scene may be captured as video that includes three dimensional information describing the scene thereby allowing a renderer to vary the viewpoint thereby allowing a user to view the dynamic scene/video from different view positions/orientations.

In many extended reality applications, a viewer pose input is determined reflecting the pose of a virtual viewer in the scene. The apparatus/ system/ application then generates one or more images corresponding to the views and viewports of the scene for a viewer corresponding to the viewer pose.

In the field, the terms placement and pose are used as a common term for position and/or direction/ orientation. The combination of the position and direction/ orientation of e.g. an object, a camera, a head, or a view may be referred to as a pose or placement. Thus, a placement or pose indication may comprise six values/ components/ degrees of freedom with each value/ component typically describing an individual property of the position/ location or the orientation/ direction of the corresponding object. Of course, in many situations, a placement or pose may be considered or represented with fewer components, for example if one or more components is considered fixed or irrelevant (e.g. if all objects are considered to be at the same height and have a horizontal orientation, four components may provide a full representation of the pose of an object). In the following, the term pose is used to refer to a position and/or orientation which may be represented by one to six values (corresponding to the maximum possible degrees of freedom). A pose may be a position and/or orientation.

Many VR applications are based on a pose having the maximum degrees of freedom, i.e. three degrees of freedom of each of the position and the orientation resulting in a total of six degrees of freedom. A pose may thus be represented by a set or vector of six values representing the six degrees of freedom and thus a pose vector may provide a three-dimensional position and/or a three-dimensional direction indication. However, it will be appreciated that in other embodiments, the pose may be represented by fewer values.

A pose may be at least one of an orientation and a position. A pose value may be indicative of at least one of an orientation value and a position value. A pose may be a position and/or orientation.

Typically, the extended reality application generates a three-dimensional output in the form of separate view ports/images for the left and the right eyes. These may then be presented to the user by suitable means, such as typically individual left and right eye displays of a VR headset. In other embodiments, the image may e.g. be presented on an autostereoscopic display (in which case a larger number of view images may be generated for the viewer pose), or indeed in some embodiments only a single two-dimensional image may be generated (e.g. using a conventional two-dimensional display).

The viewer pose input may be determined in different ways in different applications. In many embodiments, the physical movement of a user may be tracked directly. For example, a camera surveying a user area may detect and track the user's head (or even eyes). In many embodiments, the user may wear a VR headset which can be tracked by external and/or internal means. For example, the headset may comprise accelerometers and gyroscopes providing information on the movement and rotation of the headset and thus the head. In some examples, the VR headset may transmit signals or comprise (e.g. visual) identifiers that enable an external sensor to determine the movement of the VR headset.
In some systems, the viewer pose may be provided by manual means, e.g. by the user manually controlling a joystick or similar manual input. For example, the user may manually move the virtual viewer around in the scene by controlling a first analog joystick with one hand and manually controlling the direction in which the virtual viewer is looking by manually moving a second analog joystick with the other hand.

In some applications a combination of manual and automated approaches may be used to generate the input viewer pose. For example, a headset may track the orientation of the head and the movement/ position of the viewer in the scene may be controlled by the user using a joystick.

An important feature of many video systems is that of how to generate a video data signal that effectively represents the three dimensional scene, and in particular such that a rendering apparatus can effectively generate sufficiently high quality images with as low a complexity and resource usage as feasible and with the video data signal having a sufficiently low data rate.

A promising video encoding approach for flexibly representing a three dimensional scene is object orientated video encoding. In particular, in many such approaches a number of scene objects are individually encoded and included in the video data signal. Thus, in many embodiments, a video data signal may include video data for a number of scene objects where the video data for a given scene object can be decoded separately from, and independently of, video data for other scene objects, or typically from any other video data.

For example, if the video data signal represents a 3D scene such as a football game, each player may be considered a scene object and represented as an individual video object. Thus, each player may be encoded by video data that is independent of any video data encoding/capturing one of the other players, or indeed of the background (stadium, pitch, etc.). A scene object may be a (typically 3D) region in the 3D scene that may correspond to an item, entity, article etc. A scene object may typically be a region in the scene which is linked with a semantic value/label, such as e.g. "player", "ball", etc. A scene object may typically be associated with a category and the individual object may be an instantiation of the category. The category may often be defined to convey a semantic meaning.

Object orientated video encoding provides advantageous operation and performance in many scenarios and may in particular provide highly flexible video encoding, streaming, and/or decoding for many adaptive video applications, such as many VR/immersive/adaptable applications. The approach may specifically be highly suitable for applications where video data needs to be communicated from a source to a destination over a bandlimited communication channel, such as for example for a broadcast or client server application.

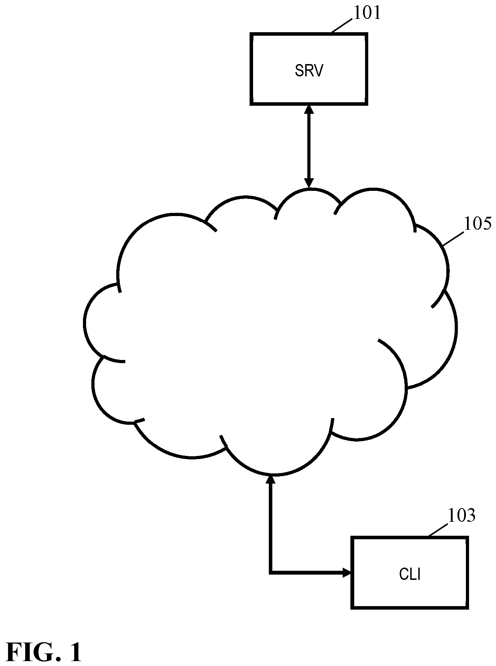

FIG. 1 illustrates such an example of a (e.g. VR/immersive) video system in which s video server apparatus 101 generates a video data signal that may be transmitted/broadcast/distributed to one or more remote video client devices 103. The video server apparatus 101 may be arranged to simultaneously support a potentially large number of video client apparatuses 103.

The video server apparatus 101 may for example support a broadcast experience by transmitting an object oriented video data signal to the video client apparatuses 103 which are then arranged to process such a video data signal to locally synthesize view images corresponding to the current pose and with the desired/required scene objects.

In the example, the video server apparatus 101 and the video client apparatus 103 are both coupled to a network 105 through which the video data signal can be communicated and specifically through which it can be communicated from the video server apparatus 101 to the video client apparatus 103. The network 105 may specifically be, or include, the Internet.

In order to provide efficient distribution, it is desirable for the data rate to be kept as low as possible for a given image quality, and this may specifically include seeking to reduce the amount of redundant data which is generated.

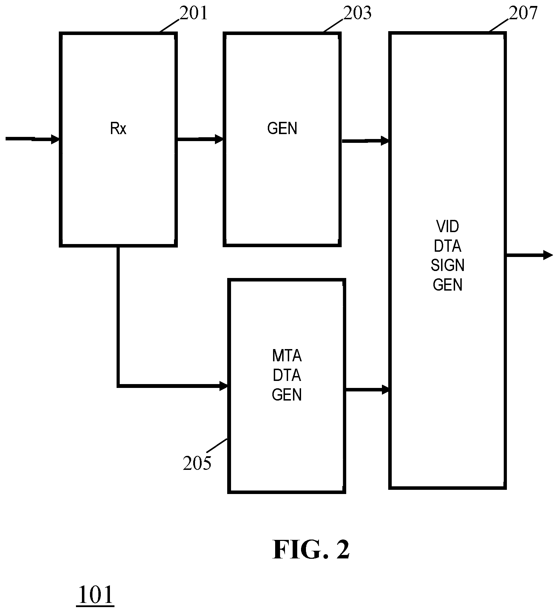

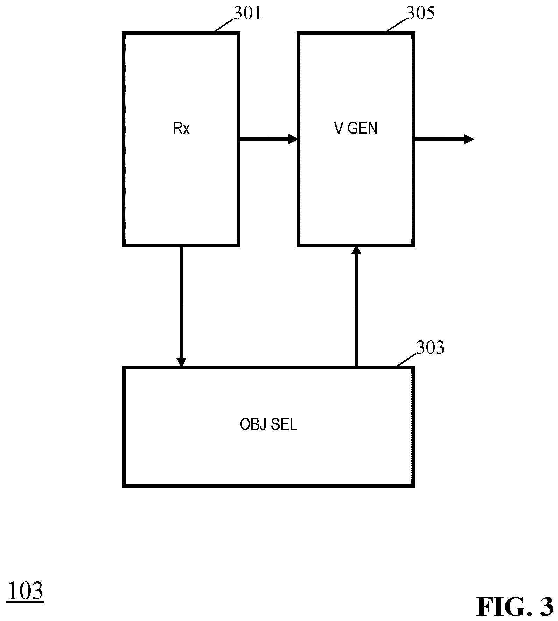

FIG. 2 illustrates an example of a video apparatus which is arranged to generate a video data signal and FIG. 3 illustrates an example of some elements of a video apparatus which is arranged to receive the video data signal from the video apparatus of FIG. 2 and which may from this generate a modified video data signal, such as specifically a conventional display signal for a 2D display. The video apparatus of FIG. 2 may specifically be a video server apparatus 101 as illustrated in FIG. 1 and the video apparatus of FIG. 3 may specifically be a video client apparatus 103 as illustrated in FIG. 1.

The video server apparatus 101 comprises a first receiver 201 which is arranged to receive video data for a three dimensional scene. The video data may be any video data representing a scene such as captured real world video data from a camera capturing a real world scene, video data generated by a virtual reality application for a virtual scene, etc.

The video data is fed to a video data generator 203 coupled to the first receiver 201 and arranged to generate a plurality of video frames from the video data. The video data generator 203 may accordingly generate video frames representing the 3D scene.

The video server apparatus 101 further comprises a metadata generator 205 which is arranged to generate metadata for the video frames. The video data generator 203 and the metadata generator 205 are coupled to a video data signal generator 207 arranged to generate a video data signal that includes the plurality of video frames as well as the metadata. The video data signal generator 207 thus generates a video data generator 203 comprising video frames representing the 3D scene as well as associated metadata.

It will be appreciated that many different approaches and algorithms are known for generating encoded video frames representing a scene from received video data (virtually or real-world) capturing the 3D scene and that any suitable approach may be used to generate the video frames. Similarly, it will be appreciated that many different approaches are known for representing the video frames and in particular that a number of different video encoding schemes and standards are known. The video data generator 203 may use any suitable approach and any suitable encoding format or standard.

However, in the specific approach, each of the video frames are generated to include a plurality of independently decodable image regions. Each such region may be generated to be decoded independently using only data from that region. Each such region may comprise a set/number of pixels which can be decoded from only the data for the pixels of the independently decodable image region. Each independently decodable image region is decodable without requiring consideration of data (for any pixel) not belonging to the independently decodable image region. In the field, such independently decodable image regions are often referred to as tiles, and thus the video frames may be encoded by number, and typically a plurality, of tiles. A tile may specifically be a (typically rectangular) region in a video viewpoint frame (e.g. in 2D video) and an atlas frame (e.g. in immersive/volumetric video).

Independently decodable image regions/ tiles may be non-overlapping regions within a video frame, such as in a video atlas (e.g. in the context of immersive MIV/V3C videos). A single frame/atlas typically comprises multiple non-overlapping tiles. Tiles are designed/generated to be independently encoded/decoded. Within a frame, tiles can have different encoder settings. Moreover, tiles from the same frame may in most embodiments be decoded in parallel.

In some embodiments, (at least some of) the video frames may be encoded as two dimensional image video frames, and specifically each video frame may provide a view image for a viewport of the 3D scene from a given viewpoint. Each video frame may represent a viewing cone of the 3D scene from a given viewpoint. The video data generator 203 may in some embodiments be arranged to receive view port images, such as e.g. from video cameras capturing a scene, and then divide the image plane into individual tiles which are then individually and separately encoded.

In many cases, different video frames may represent views from different viewpoints thereby e.g. providing 3D information/data. In some embodiments, the video frames may e.g. be supplemented with 3D information, such as depth data. Thus, a 3D representation of the 3D scene may be provided in many embodiments.

A Supplemental Enhancement Information (SEI) data field/message may provide additional data associated with primary content that enhances or clarifies the interpretation, processing, or presentation of the primary content. The data of such a message may include supplemental data/information that is not required/necessary for the video frames of the video data signal to be decoded. Decoding of the video frames of the video data signal may be possible without considering data included in a Supplemental Enhancement Information data field/message. A supplemental enhancement message, as the name indicates, may be supplemental because the conformant decoding of the bitstream does not depend on the data of the message, but may provide enhancement data that may enable the decoder/client to behave in a way that is more suitable. Examples are film grain, parametric HDR, buffering, time stamps, etc.

The video data generator 203 may in some embodiments generate video atlases from the received video data and then divide these into different tiles that are then encoded individually and thus can be decoded individually. It will be appreciated that many different approaches and algorithms are known for generating and encoding video atlases and that any suitable approach may be used.

In some embodiments, the first receiver 201 may directly receive video data in a format suitable for the output video data signal that is to be generated, and the video data generator 203 may in some such cases be arranged to perform little or no image processing on the received data to generate the video frames.

In many cases, the video data signal may be generated as a volumetric video signal and specifically the video data signal may be an MPEG Immersive Video (MIV) or an MPEG Visual Volumetric Video-based Coding (V3C) video data signal.

The video frames are specifically encoded using an object encoding approach where video for individual scene objects may be individually encoded. Such object video coding is very promising for the future video encoding applications as it provides more intelligent and adaptive video processing, including e.g. video analytics, enhanced augmented reality experiences, etc. Video objects can be coded independently and specifically the video objects are encoded using independently decodable image regions. For example, the scene objects may be encoded using tiles as implemented in recent video codecs, such as H265, AV1, VVC encoding etc.

Tiles can be very useful for coding objects in the video. For example, in a video of a football match, the players and the background can be coded in different tiles. In principle, each player, or even part of the player body can be coded in separate tiles. Coding objects in tiles makes object-specific operations possible, such as selective decoding of objects. For example, decoding only football players, and applying a different background. This feature, i.e. decoding object-specific tiles, can be particularly useful for AR/VR applications.

Existing video standards, and indeed even recent immersive video standards, have very limited support for objects. In some standards, it is possible to define objects in a volumetric scene by an identity and/or a label (category). The standard may further define patches which are small image areas within a tile. In immersive/volumetric video, a patch may specifically be a rectangular region in a tile. A patch may include image data for a plurality of scene objects. A scene object may be encoded by multiple patches, in multiple tiles, and/or in multiple atlases if atlases are used.

For example, for the V3C volumetric encoding standard, objects in the volumetric/ 3D scene may be specified via V3C SEI messages with their IDs and labels (i.e. categories).

As another example, for the MIV (ISO/IEC FDIS 23090-12) encoding standard, the syntax element pdu_entity_id enables the association of a patch in a tile in an atlas to an entity which is the term used for objects within the standard. The entity ID's in MIV are meant to be generally applicable. That is, the standard does not give any meaning to those ID's with the intention that a meaning can be given at system level or application level.

In the described approach, an improved support for object-based encoding/processing is provided which in particular may allow a number of facilitated and/reduced complexity/resource processing.

In the approach, the metadata generator 205 is arranged to generate metadata that includes an indication of a set of scene objects for the three-dimensional scene. The metadata generator 205 may specifically generate metadata that provides an object identity and an object label/category for one or typically more objects in the 3D scene.

The label/category may typically be a semantic label indicating the type/sort of object. Examples of possible categories for a 3D scene being a football game may be player, ball, stadium, pitch, etc. The identity may be an identity that is unique to the specific object. The identity may represent an instance/member of a category. Thus, in many cases, the objects may be represented by a unique identity and a category label, such as e.g. Player 001, Player 002, etc.

In addition, the metadata generator 205 is arranged to generate the metadata to include at least one, and typically a plurality (and often many), link indications where each link indication provides a linking of a scene object to a set of independently decodable image regions of one or more of the video frames. The link indications of the metadata may for example be arranged to provide a set of independently decodable image regions which are linked to a given scene object identity. The metadata may in some embodiments include data that defines a plurality of scene objects with each of these being represented by an object identity and typically an object label/category. For each (or at least some) of the object identities, one or more link indications are provided which identifies a set of tiles that provide image data for the specific object.

The video data generator 207 generates the video data signal to include the video frames and the metadata including the link indications. In many cases, each of the independently decodable image regions may be represented by individual data fields/blocks and specifically in data fields/blocks that may comprise data for only one independently decodable image region. Thus, a video data signal is generated which includes direct links between scene objects and the independently decodable image regions/tiles that provide the image data for the scene objects.

The video data signal generator 207 thus generates a video data signal comprising video frames representing the 3D scene as well as associated metadata where the video frames include independently decodable image regions.

FIG. 3 illustrates an example of some elements of a video apparatus in accordance with some embodiments of the invention. The video apparatus may specifically be the video client apparatus 103 of FIG. 1 and will be described with reference to this.

The video client apparatus 103 comprises a second receiver 301 which may receive the video data signal from the video server apparatus 101. Thus, the second receiver 301 may receive a video data signal that includes a plurality of video frames comprising independently decodable image regions, an indication of a set of scene objects for the three-dimensional scene, and at least one link indication linking a first scene object of the three-dimensional scene to a set of independently decodable image regions.

The video client apparatus 103 further comprises an object selection circuit 303 arranged to determine a set of the scene objects. Specifically, the object selection circuit 303 may receive the metadata from the received video data signal and proceed to extract the object indications therefrom. It may then proceed to select a set of scene objects which may typically be a subset of the scene objects indicated in the metadata.

The object selection circuit 303 and the second receiver 301 are coupled to a video signal generator circuit 305 arranged to generate a modified video signal from the received video data signal. The modified video signal is generated in dependence on the set of scene objects that are determined by the object selection circuit 303. In particular, in many embodiments and scenarios, the video signal generator circuit 305 may be arranged to generate the modified video signal based on the tiles (independently decodable image regions) which by the link indications are indicated to be linked to one (or more) of the scene objects of the set of scene objects. Further, the modified video signal may be generated without considering at least one tile (independently decodable image regions) of the video frames which is not linked to any scene object of the set of scene objects. Accordingly, in many embodiments, the video data generator 203 may be arranged to exclude at least one independently decodable image region from being used to generate the modified video signal in response to no link indication providing a link between the independently decodable image region and any scene object of the scene objects. The video data generator 203 may be arranged to discard an independently decodable image region in response to a determination that no link indication provides a link between the independently decodable image region and a scene object comprised in the set of scene objects determined by the object selection circuit 303.

It will be appreciated that the object selection circuit 303 may be arranged to determine the set of scene objects in any suitable way. For example, in some embodiments, the object selection circuit 303 may be arranged to determine the set of scene objects based on position (or pose) data for the objects. As a simple example, the video client apparatus 103 may provide an XR experience where a video display output image (stereo or mono dependent on the specific application) is generated to reflect the view of the 3D scene from a given viewpoint. The application may allow a user to dynamically move the viewpoint in the scene. In such an application, the object selection circuit 303 may determine the set of scene objects to include objects that are within a given distance of the current viewpoint and to exclude any object with a position at a further distance. The video client apparatus 103 may then proceed to extract the tiles that are linked to the selected subset of scene objects and proceed to generate a display video signal which comprises view images for the given viewpoint and including the scene objects that are close thereto while excluding scene objects that are further away. Thus, in the example, a display signal can be generated which accurately represents the local environment of the viewer but which does not include objects that are distant to the viewer. Such an approach may in many embodiments provide a high quality user experience while very substantially reducing the required complexity and resource required to generate the view images.

In some embodiments, the object selection circuit 303 may include a user interface which includes a user input functionality such that user inputs can be received. For example, the video client apparatus 103 may be implemented using a personal computer which may comprise a display (or display output) and e.g. a keyboard, mouse or other functionality through which a user can provide an input to the system. The object selection circuit 303 may in such a case be arranged to select scene objects for the set of scene objects in response to a user input received from the user interface.

As a specific example, the object selection circuit 303 may be arranged to extract the object identification metadata and display a list of the indicated objects to a user. For example, for an example of the video data signal representing a football game, the user may be presented with a set of objects corresponding to the players. The object selection circuit 303 may then receive an input from a user indicating which of the objects, i.e. which of the players, should be included in the generated display signal.

The object selection circuit 303 may accordingly generate the set of scene objects to include only the selected players and excluding the players not selected. The video signal generator circuit 305 may then produce the display signal to include viewport images for the given viewpoint but with the viewport images only including the players selected by the user. The video signal generator 203 may generate a background e.g. from video data of the video frames or e.g. as a virtual background generated from a model. It may then for each object of the set of scene objects determine the link indications for the objects and extract the tiles linked to the objects. It may then proceed to generate image data for the individual objects/players and then combine this image data with the background image data to generate the final image. This process may be repeated for each video time instant to generate a video frame and the output modified video data signal may be generated as a sequence of such view images. In this way, a modified video signal is generated that shows only a subset of the players (if only a subset is selected by the user). However, further, a very substantial reduction in the processing resource required to produce such images can be achieved. Thus, in addition to providing a modified user experience, the approach may result in a very substantial complexity reduction. In particular, the use of the described link indications allows for a very efficient processing as it allows low complexity and low resource retrieval of the desired/required data. In particular, typically the selection and retrieval of the necessary video data can be achieved without requiring any other video data to be decoded. As decoding tends to be a substantial resource load in most practical applications, this may allow a very substantial increase in computational efficiency.

In some embodiments, the video client apparatus 103 may be arranged to generate a modified video signal which corresponds to the received video data signal but with a reduced data rate. The modified video signal may be the same format as the input signal and may use the same encoding specification/standard, but with a reduced data rate. In particular, the video client apparatus 103 may in some embodiments be arranged to generate the modified video signal by removing one or more independently decodable image regions from the received video data signal. The one or more independently decodable image regions being removed are selected based on the set of scene objects determined by the object selection circuit 303 and on the link indications. The video signal generator circuit 305 may then proceed to remove/extract independently decodable image regions for which the link indications do not indicate any link with any scene object of the set of scene objects.

For example, as in the previous examples, the set of scene objects may be determined based on e.g. selecting scene objects close to the current viewpoint or selecting scene objects based on a user input. The video signal generator circuit 305 may then generate the modified video signal by selecting and including the independently decodable image regions that the link indications indicate are linked to scene objects of the set of scene objects and to not include at least one (and typically more or all) of the independently decodable image regions that are not indicated by the link indications to be linked to any scene object of the set of scene objects. Thus, a modified video signal may be generated that corresponds to the received video data signal but with independently decodable image regions only for the selected scene objects.

In some embodiments, the video client apparatus 103 may accordingly implement a bitstream transform function which receives the video data signal and determines a set of scene objects and which generates an output bitstream/modified video signal that contains the indicated objects while removing at least part of at least one other object (i.e. patch data and/or video data). This may be achieved by parsing a small subset of data units (e.g. a parameter set or SEI message).

The approach may allow a low complexity video data signal modification and data reduction and transformation. The modification and data reduction can be achieved based only on considering the link indications and without any requirement or need for decoding image data or performing any image processing.

In some embodiments, the video client apparatus 103 may process the video data signal multiple times to create multiple modified video signals, e.g. with different modified video signals including different objects. Indeed, in some applications, a separate modified video signal may be generated for each scene object.

In some embodiments, a client may transmit a request to the video client apparatus 103 with the request indicting one or more object ID's, and the video client apparatus 103 may in response generate a modified video signal with tile data for the corresponding scene objects (but not for tiles that are not linked to any of the indicated objects). This modified video signal may then be transmitted to the client for rendering/presentation.

The exact processing and approach for the operation of the video client apparatus 103 (and in particularly when performing a bitstream transform operation) may depend on the specific details of the video data signal, including in particular dependent on the encoding standard and approach used.

For example, the encoding format HEVC (High Efficiency Video Coding (also known as H.265) has the concept of motion constrained tile sets (MCTS) meaning that there can be rectangular regions and coding units within a tile that cannot have motion vectors that go outside of that tile. There is a similarly named Supplemental Enhancement Information, SEI, message that can be parsed to learn about the bounding boxes of each of the tiles. Based on that, it can be determined which coding units need to be preserved or can be dropped when only a subset of the tiles is of interest.

The format known as VVC (Versatile Video Coding, also known as H.266) has a better design for tiled video with sub-pictures. These are independently decodable sub-bitstreams and thus it is relatively straightforward to decode only a subset of the tiles of a VVC bitstream.

For a V3C (Visual Volumetric Video-based Coding)/MIV (MPEG Immersive Video) + video codec, improved support for tiles is provided and different approaches may be used. For example, the atlas frame parameter set (AFPS) in V3C can be parsed to map tile ID to bounding boxes, and then a video decoder can be provided with multiple regions of interest to decode. Ideally, the tiles in V3C correspond to the equivalent tile concept in the video codec such that a minimal amount of coding units need to be decoded.

In the described approach, link indications may specifically be provided in Supplemental Enhancement Information, SEI messages.

In some embodiments, link indications may be provided in a Network Abstraction Layer, NAL, unit of typically a Video Coding Layer, VCL. In particular, one or more of the link indications may be provided as a parameter set in a NAL unit. There may be VCL and non-VCL NAL units with a VCL NAL unit typically having "coded pixels", and with a non-VCL NAL unit for instance being a parameter set. In some embodiments, the link indications may be in a NAL unit with a NAL unit header, and specifically with a NAL unit type, that enables the identification of that NAL unit as a NAL unit that is able to contain a link indication. This can be a specific parameter set or other non-VCL NAL unit. The link indication(s) may be provided in a NAL unit that does not contain SEI messages.

A Network Abstraction Layer (NAL) may be a conceptual layer that organizes and encapsulates coded data to facilitate its transport and storage, providing a format that helps manage network transmission and error handling.

A NAL unit may be a concept used in video coding to describe a packet of video data in an abstract way, in the sense that the packet description does not relate to a specific carriage method (methods for transmission over a network or containers for storage, e.g. MPEG-2 TS, RTP, MP4, Matroska, etc.), and the NAL unit has information in a NAL unit header (typically only a few bytes) that may enable (networking/data storing) processes to have a high-level view of the bitstream while parsing only the container that carries the NAL units and the NAL unit headers.

A sequence of NAL units may be referred to as a NAL unit stream. The video data signal may comprise a NAL unit stream. A minimal container may have size fields or start codes to identify the start and end of each NAL unit.

Such messages may be used to provide clear information on how scene objects map to the video encoding tiles of the video frames. The video client apparatus 303 accordingly needs to parse only a small subset of the data (in particular parameter sets and SEI messages). Typically, only the beginning of a bitstream may need to be parsed in order to obtain information, such as specifically:
A list of object IDs
A list of tile indices
A list of regions of interest
A list of data units
Links between tiles and object IDs (typically from object IDs to tiles)

In some embodiments, the video client apparatus 103 may be arranged to perform video decoding to generate a display video signal by first performing the described data signal transformation/data reduction followed by a decoding and/or rendering process being applied to the resulting modified video signal by the video client apparatus 103.

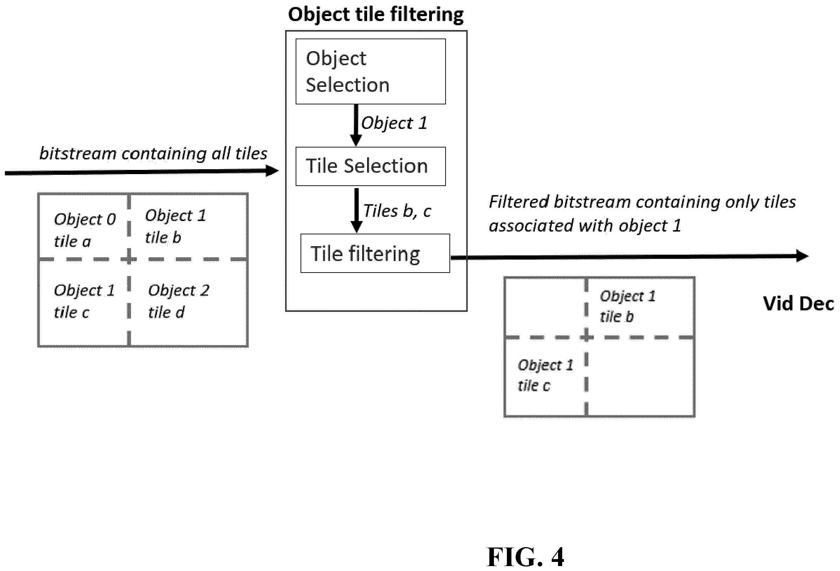

As an example, a decoder application may include a bitstream transform function based on tile selection. The decoding application can filter the tiles based on selected objects, as illustrated in FIG. 4. The decoding application may receive a video data signal/ bitstream containing all tiles. The decoding application may implement functions for "object selection", for example, via a user interface. Selected objects are included in a set of scene objects and then used in the function "tile selection", where tiles linked to the objects of the set of scene objects are selected. Optionally, selected tiles can be used in the function "tile filtering" which forms a new bitstream containing only a subset of the tiles, namely those linked to the objects of the set of scene objects.

The approach may provide an efficient operation and may provide advanced operations and features with low complexity processing. For example, the approach may be used to visualize a specific object. The user may e.g. perform a 360 degree fly-around of the object and this may be achieved by identifying and rendering the specific tiles for the selected object. Further, the application can decide what to render outside the silhouette of the object, such as a constant color/texture backdrop, a computer graphics synthetic model such as a soccer field or stadium model etc.. However, it may also be a use case to render the other objects and the background at a lower resolution since these are not the focus of attention and typically further away. The video data signal may be generated to include one or more 'backdrop tiles'. Such tiles may include/represent all other objects and the background. These 'backdrop tiles' may e.g. contain patches at a lower resolution than other tiles.

The approach may in particular provide improvements with respect to the current support and approaches for object-based coding where it is not possible to link objects directly to the associated tiles by parsing specific messages. In current approaches, all data (and specifically SEI messages and MIV syntax elements) need to be parsed to get the association between an object and its associated tiles. This limits the efficiency of the decoding process, if object-specific tile decoding is desired.

The described approach makes it possible to implement a simple process for a video apparatus (e.g. decoder) to take as input a video data signal with metadata including object information link indications and output a modified video signal with e.g. only the video for the selected objects. The link indications may provide so-called "atlas/frame tile object association" information to specify atlas/image/frame tiles for each object presented in the scene. The link indications may provide an "atlas/frame/image tile object association" which links objects and (2D) tiles in frames/atlases/images.

In many embodiments, the linking information may be provided in dedicated link information data fields/messages. In particular, the video data signal may comprise one or more Supplemental Enhancement Information, SEI, messages dedicated to comprising the link indications.

This may provide improved operation in many cases and may allow fast and efficient identification of tiles for given objects. Such low complexity and high efficiency is not feasible in current systems. For example, patch information of SEIs is not feasible because there can be many patches in a tile, and there can be many patches for an object. This would require a large overhead and redundant computations to be used for associating tiles with objects. As another example, a *pdu_entity_id* syntax element is typically not useful in the same way because it requires parsing an entire atlas sub-bitstream in order to determine which tiles represent which objects. As yet another example, a volumetric rectangle information SEI message could be used to mark out tiles representing certain objects, but this would require parsing of all frames of an atlas sub-bitstream in order to determine which tiles of the video sub-bitstreams should be decoded. Such approaches may introduce a decoding latency and overhead in terms of CPU usage, memory consumption and bandwidth in case of multi-track/adaptive streaming.

In many embodiments in which the video frames are 2D view images/frames, the link indications may be included in SEI messages.

In some embodiments for volumetric/immersive video, the link indications may as mentioned be included in a V3C or MIV data signal as a new parameter set (NAL unit) or as a SEI message. Further, in embodiments and applications where the video frames are video atlases, the link indications may be provided in part of a common data section/segment/field that is common for different atlases and/or may be provided in a data sections/segments/fields that are specific to a subset, and often only one, atlas.

Different approaches and formats may be used to represent the link indications in the video data signal(s).

For example, in some applications, link indications may be provided in accordance with the following syntax which for each object defines the associated tiles in each atlas/frame:$atlas / frame _ title _ object _ link \left[o\right] \left[a\right] = list of title IDs in the atlas / frame ,$
*where,*
*o is the volumetric object ID, a is the atlas or frame ID.*
The *atlas*/*frame*_*tile*_*object link* table can be initialized and/or reset during the encoding and decoding of the video data signals. It can also be partially updated during the encoding and decoding.

Specifically for immersive video, the *atlas_tile_object_link* may be used as the video frames are atlases. For 2D/view video frames, the term *frame*_*tile*_*object_link* may be used. In case of simple 2D video, only a single frame is provided for each instant and the syntax may be simplified to:
*frame_tile_object_link[o]* = *list of tile IDs in the frame,*
*where,*
*o is the volumetric object ID*

For immersive video, the atlas tile object link indications may be transmitted e.g. as V3C or MIV SEI messages or as V3C or MIV parameter set.

In the following, some specific examples of possible advantageous implementations and syntaxes will be described.

In some embodiments, an SEI message may be modified to include link indications. For example, the approach may be based on principles and approaches used in V3C, such as specifically the Atlas Object Association (AOA) SEI in ISO/IEC 23090-5:2024 (V3C). An SEI may be used which includes some syntax elements with semantics being virtually the same as their AOA counterparts.

A link indication SEI message such as indicated below may be introduced to/used together with V3C or MIV. V3C has a mechanism for carrying SEI messages as part of the V3C unit stream, and that mechanism also has an extension mechanism so that MIV can define its own SEI messages. In some approaches, the SEI message could also be added to other V3C extensions such as V-PCC, V-DMC or a future extension.

A specific syntax may be:

| | |
|---|---|
| tile_object_association( payloadSize ) { | **Descriptor** |
| **toa_persistence_flag** | u(1) |
| **toa_reset_flag** | u(1) |
| **toa_num_updates** | ue(v) |
| if( toa_num_updates > 0) { | |
| **toa_log2_max_object_idx_tracked_minus1** | u(5) |
| **toa_signalled_tile_id_length_minus1** | u(4) |
| **toa_select_atlases_flag** | u(1) |
| if( toa_select_atlases_flag) { | |
| **toa_num_atlases_minus1** | u(6) |
| for( j = 0; j <= toa_num_atlases_minus1; j++ ) | |
| **toa_atlas_id**[ j ] | u(6) |
| } | |
| for( j = 0; j <= toa_num_atlases_minus1; j++ ) { | |
| **toa_num_tiles_in_atlas_minus1**[ j ] | ue(v) |
| for( n = 0; n <= toa_num_tiles_in_atlas_minus1[ j ]; n++ ) | |
| **toa_tile_id**[ j ][ n ] | u(v) |
| } | |
| for( i = 0; i < toa_num_updates; i++ ) { | |
| **toa_object_idx**[ i ] | u(v) |
| k = toa_object_idx[ i ] | |
| for(j = 0; j <= toa_num_atlases_minus1; j++) | |
| for( n = 0; n <= toa_num_tiles_in_atlas_minus1 [ j ]; n++) | |
| **toa_object_in_tile**[ k ][ toa_atlas_id[j ] ][ toa_tile_id[ j ][ n ] ] | u(1) |
| } | |
| } | |
| } | |

where
**toa_persistence_flag** is a data flag indicating the scope/applicability of the provided data. Specifically if the flag indicate that the data is persistent (1), then the information remains active until there is another SEI message of the same type. If non-persistent (0), then the information is only for the current frame.
**toa_reset_flag** is a data flag that if set to a given value indicates that all existing links between scene objects and tiles are no longer valid and should be deleted.
For example, a **toa_reset_flag** equal to a given value, e.g. 1, indicates that all entries in the tile object linkin table shall be removed, e.g as follows:

```
 for ( i = 0; i < MaxNumObjects; i++ ) {
  for( j = 0; j < MaxNumAtlases; j++ ) {
   for ( n = 0; n < MaxNumTiles; n++ ) {
    ObjectInTile[ i ][ j ][ n ] = 0
   }
  }
 }
```

Thus, in some embodiments, the metadata of the video data signal may include a flag indicating that all previous link indications are invalid and the video client apparatus 103 may be arranged to discard existing link indications in response to the video data signal including such a flag.
**toa_num_atlases_minus1** indicates a number of video atlases present in the coded V3C Sequence (CVS).

Specifically the value indicated by **toa_num_atlases_minus1** may be increased by 1 to indicate the number of atlases present in the coded V3C Sequence (CVS). The value
**aoa_num_atlases_minus1** is set equal to vps_atlas_count_minus1. When not present, the value of **toa_num_atlases_minus1** is set to a default value of zero.
**toa_num_updates** is a value indicating a number of objects that are to be updated in the object to tile table by the current SEI message. Thus, the metadata of the video data signal may include a SEI message that includes a data filed indicating a number of objects for which the SEI message provides link indications.
**toa_log2_max_object_idx_tracked_minus1** is a value which when increased by 1 specifies the number of bits used to signal the value of an object index in the current tile object link SEI message.
**toa_atlas_id**[ j ] is a value specifying an atlas ID of the j-th atlas. When not present, the value of toa_atlas_id[ j ] is considered to have the default value of zero.
**toa_object_idx**[ i ] is a value indicating the i-th object index. The number of bits used to represent **toa_object_idx**[ i ] may be equal to/ set by the value **toa_log2_max_object_idx_tracked_minus1.**
**toa_object_in_tile**[ i ][ a ][ n ] indicates the value of **ObjectInTile**[ **i ][ j** ][ **n ]** for object ID equal to i, atlas ID equal to j, and tile ID equal to n, as follows:

```
if( toa_select_atlases_flag )
  ObjectInTile[ i ][ j ][ n ] = toa_object_in_tile[ i ][ j ][ n ]
 else
  for( j = 0; j < 64; j++ )
   ObjectInTile[ i ][ j ][ n ] = toa_object_in_tile[ i ][ 0 ][ n ]
```

**ObjectInTile[ i** ]**[ j ][ n ]** equal to 1 indicates that the object with index i is present in tile n of the atlas with atlas ID equal to j. **toa_object_in_atlas[ i ][ j ][ n ]** equal to 0 indicates that the object with index i is not present in atlas with atlas ID equal to j.

Thus, in many embodiments, the metadata of the video data signal may include a data field/message that includes the link indication. These may be provided by a message including a data field indicating a number of atlases for which the message provides link indications, a data field indicating a number of tiles in each atlas, and/or an identity for each tile in each atlas. The message may include an indication of the number of objects for which the message provides link indications and/or a data field which for each object and each tile and each atlas indicates whether that object is included in the tile for the atlas.

In some embodiments, the video data signal comprises separate dedicated sub-bitstreams for at least two video frames of the plurality of video frames, and specifically may comprise separate dedicated sub-bitstreams for at least two video atlases. A dedicated sub-bitstream for a video frame (atlas) may only comprise video frame data for a single video frame. A dedicated sub-bitstream for a first video frame (atlas) may include video frame data for no other video frame than the first video frame. In many embodiments, such a video data signal may in addition include one or more common sub-bitstreams which may be common for one or more video frames. Such bitstreams may include video frame data for a plurality of video frames (atlases). In addition, a dedicated sub-bitstream may include metadata for the video frame of the sub-bitstream. Similarly, the common sub-bitstream may include metadata for a plurality of video frames and may specifically include metadata for the video frames for which the sub-bitstream comprises video frame data.

Thus, in some embodiments, the video data signal generator 207 may be arranged to generate the video data signal to include at least one dedicated sub-bitstream comprising video frame data and metadata for one video frame of the plurality of video frames and a common sub-bitstream comprising video frame data and metadata for more than one video frames of the plurality of video frames.

In such cases, link indications may be included in metadata of different sub-bitstreams. In particular, in some embodiments, the video data signal generator 207 may be arranged to include link indications for a given video frame in the sub-bitstream that includes video frame data for the video frame comprising the tile of the link indication.

The video data signal generator 207 may be arranged to include the metadata such that for at least a first link indication, the metadata includes an indication of whether the first link indication is included in a dedicated sub-bitstream or in the common sub-bitstream. Thus, in some embodiments the video data signal is generated to include an indication that provides information on where, and specifically in which sub-bitstreams, different link indications are provided.

For example, some video encoding approaches, such as the V3C encoding approach, include the concept of atlas sub-bitstreams that carry patch data and SEI messages that relate to a specific atlas. For example, a sub-bitstream may include pixel data for the same video atlas and thus the atlas ID may be the same for all data of the sub-bitstream. V3C also has a common atlas sub-bitstream. The information in the common atlas sub-bitstream applies to all atlases. The main purpose is to signal view parameters, but it is also possible to carry SEI messages. By design SEI messages do not have parsing dependencies and the syntax is entirely self-contained.

In many embodiments, the metadata may be generated to include at least one indication which is indicative of whether a set of link indications provide link indications for link identities of a single (or a subset) of video frames or provide link indications for link identities of a (larger than the subset) plurality of video frames. The tiles of different video frames may share tile identities, and the metadata may be generated to include at least one indication indicative of whether a set of link indications provide a link to a tile identity of a single (or a subset) of video frames or to tile identities of a plurality of video frames.

As a specific example, a SEI message, e.g. following the syntax indicated above, may include an indication which may be set to indicate whether a set of link indications, and specifically all the link indications included in the message in which the flag is provided, apply to a single tile of a single video frame or whether they apply to multiple tiles of multiple video frames.

In particular, an (e.g. SEI) message e.g following the syntax indicated above may include an indication/flag, **toa_select_atlases_flag,** that e.g. when set to 0, indicates that the information applies to all tiles with the given tile ID, and that when e.g. set to 1 indicates that the information applies to list of atlases by ID, as indicated in the table below:

| **toa_select_ atlases_flag** | **Carry SEI message in Atlas sub-bitstream** | **Carry SEI message in Common atlas sub-bitstream** |
|---|---|---|
| **0** | Tile ID's map to the tiles of the current atlas with ID vuh_atlas_id. | Tile ID's map to all tiles in all atlases that have this ID. |
| | | |
| | Benefit: Allows for local reasoning: the metadata on the atlas is in the atlas sub-bitstream itself. It is only needed to decode the start of the atlas sub-bitstream to determine which | Benefit: Fewer bits to signal. |
| 1 | Redundant. The only valid atlas ID is vuh_atlas_id. | Tile ID's map to the tiles of the atlas with the specified atlas ID. |
| | | |
| | Benefit: often no benefit, may be forbidden in many embodiments. | Benefit: When only a subset of the objects is of interest, then it is only needed to decode the start of the common atlas sub-bitstream (which is always needed for MIV anyhow) to determine which atlas tiles need to be decoded. This is especially beneficial when the sub-bitstreams can be requested from a server. |

The above SEI message may be simplified if the value of **toa_select_atlases**_**flag** is considered fixed. For example, in many embodiments, rather than having a more complex syntax/message format as indicated above, two different messages corresponding to the two different settings of **toa_select_atlases_flag** may be designed, or indeed only one of the options may be supported. For example, if **toa_select_atlases_flag** is always set to 0, the above SEI message signals a mapping between tile ID and object ID. When **toa_select_atlases_flag** is always set to 1, the SEI message signals a mapping between (atlas ID, tile ID) and object ID. Both alternatives may be suitable for different embodiments. Corresponding syntax structures (derived from the above syntax and considering a fixed value for **toa_select_atlases_flag**) are provided below.

### (Atlas-agnostic) Tile object association SEI

| | |
|---|---|
| tile_object_association( payloadSize ) { | **Descriptor** |
| **toa_persistence_flag** | u(1) |
| **toa_reset_flag** | u(1) |
| **toa_num_updates** | ue(v) |
| if( toa_num_updates > 0) { | |
| **toa_log2_max_object_idx_tracked_minus1** | u(5) |
| **toa_signalled_tile_id_length_minus1** | u(4) |
| **toa_num_tiles_minus1** | ue(v) |
| for( n = 0; n <= toa_num_tiles_minus1; n++ ) | |
| **toa_tile_id**[ n ] | u(v) |
| for( i = 0; i < toa_num_updates; i++ ) { | |
| **toa_object_idx**[ i ] | u(v) |
| k = toa_object_idx[ i ] | |
| for( n = 0; n <= toa_num_tiles_minus 1; n++ ) | |
| **toa_object_in_tile**[ k ][ toa_tile_id[ n ] ] | u(1) |
| } | |
| } | |
| } | |

### Atlas Tile Object Association SEI

| | |
|---|---|
| atlas_tile_object_association( payloadSize ) { | **Descriptor** |
| **toa_persistence_flag** | u(1) |
| **toa_reset_flag** | u(1) |
| **toa_num_updates** | ue(v) |
| if( toa_num_updates > 0) { | |
| **toa_log2_max_object_idx_tracked_minus1** | u(5) |
| **toa_signalled_tile_id_length_minus1** | u(4) |
| **toa_num_atlases_minus1** | u(6) |
| for( j = 0; j <= toa_num_atlases_minus1; j++ ) | |
| **toa_atlas_id**[ j ] | u(6) |
| for( j = 0; j <= toa_num_atlases_minus1; j++ ) { | |
| **toa_num_tiles_in_atlas_minus1**[ j ] | ue(v) |
| for( n = 0; n <= toa_num_tiles_in_atlas_minus1[ j ]; n++ ) | |
| **toa_tile_id**[ j ][ n] | u(v) |
| } | |
| for( i = 0; i < toa_num_updates; i++ ) { | |
| **toa_object_idx**[ i ] | u(v) |
| k = toa_object_idx[ i ] | |
| for(j = 0; j <= toa_num_atlases_minus1; j++) | |
| for( n = 0; n <= toa_num_tiles_in_atlas_minus1[ j ]; n++) | |
| **toa_object_in_tile**[ k ][ toa_atlas_id[ j ] ][ toa_tile_id[ n ] ] | u(1) |
| } | |
| } | |
| } | |

Another suitable approach for many embodiments is to directly map tile ID's and object ID's. For example, tile ID's may be selected from a large number of possible IDs and these IDs may even be associated with a semantic meaning. For example, in some embodiments, it may be possible to choose any 16-bit number for a tile ID thereby making it very flexible. Although, it may restrict the approach to having only one object per tile, and one tile per atlas per object, such a restriction may be acceptable in many embodiments.

The SEI message when present may signal that the patches in a tile with a tile ID's that corresponds to a known object ID, correspond to that object ID. When not present, tile ID's may be arbitrary or may have some other meaning.

Further, a possible approach may be that when the SEI message is carried in an atlas sub-bitstream it applies to all tiles in that atlas. When the SEI message is carried in the common atlas sub-bitstream, it may apply to all tiles in all atlases.

In such cases, a very simple link indication syntax may be used:

| | |
|---|---|
| direct_tile_object_association( payloadSize ) { | **Descriptor** |
| **toa_persistence_flag** | u(1) |
| } | |

If a tile has patches of multiple objects, then it may be useful to signal which patch belongs to which object. An advantageous way to do that in MIV may be to use the *pdu*_*entity*_*id* syntax element. This is often more efficient and convenient than the Patch information SEI. The signaling may specifically be done by applying the approach/rule of:
If a tile object association SEI message is present, and *asme_max*_*entity*_*id* is greater than zero, then the *pdu*_entity_*id* maps to the object index as specified in V3C.

This may specifically tie together the proposed SEI message and the existing SEI messages in V3C.
The comments above have focused on video atlases. However, many video formats do not use atlases. For example, for 2D video, there is typically no atlas but just a video frame. The proposed approach (and in particular the atlas-agnostic SEI message indicated above) is also suitable for such applications, and in particular for 2D video.

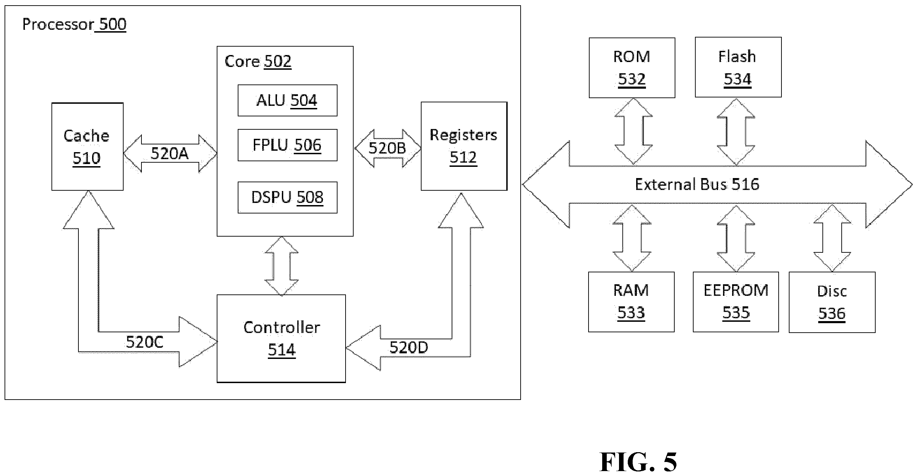

FIG. 5 is a block diagram illustrating an example processor 500 according to embodiments of the disclosure. Processor 500 may be used to implement one or more processors implementing an apparatus as previously described or elements thereof. The processor 500 may be suitable for the functionality of the video server apparatus 101 and/or the video client apparatus 103. Processor 500 may be any suitable processor type including, but not limited to, a microprocessor, a microcontroller, a Digital Signal Processor (DSP), a Field Programmable Gate Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 500 may include one or more cores 502. The core 502 may include one or more Arithmetic Logic Units (ALU) 504. In some embodiments, the core 502 may include a Floating Point Logic Unit (FPLU) 506 and/or a Digital Signal Processing Unit (DSPU) 508 in addition to or instead of the ALU 504.

The processor 500 may include one or more registers 312 communicatively coupled to the core 502. The registers 512 may be implemented using dedicated logic gate circuits (e.g., flip-flops) and/or any memory technology. In some embodiments the registers 512 may be implemented using static memory. The register may provide data, instructions and addresses to the core 502.

In some embodiments, processor 500 may include one or more levels of cache memory 510 communicatively coupled to the core 502. The cache memory 510 may provide computer-readable instructions to the core 502 for execution. The cache memory 510 may provide data for processing by the core 502. In some embodiments, the computer-readable instructions may have been provided to the cache memory 510 by a local memory, for example, local memory attached to the external bus 516. The cache memory 510 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 500 may include a controller 514, which may control input to the processor 500 from other processors and/or components included in a system and/or outputs from the processor 500 to other processors and/or components included in the system. Controller 514 may control the data paths in the ALU 504, FPLU 506 and/or DSPU 508. Controller 514 may be implemented as one or more state machines, data paths and/or dedicated control logic. The gates of controller 514 may be implemented as standalone gates, FPGA, ASIC or any other suitable technology.

The registers 512 and the cache 510 may communicate with controller 514 and core 502 via internal connections 520A, 520B, 520C and 520D. Internal connections may be implemented as a bus, multiplexer, crossbar switch, and/or any other suitable connection technology.

Inputs and outputs for the processor 500 may be provided via a bus 516, which may include one or more conductive lines. The bus 516 may be communicatively coupled to one or more components of processor 500, for example the controller 514, cache 510, and/or register 512. The bus 516 may be coupled to one or more components of the system.

The bus 516 may be coupled to one or more external memories. The external memories may include Read Only Memory (ROM) 532. ROM 532 may be a masked ROM, Electronically Programmable Read Only Memory (EPROM) or any other suitable technology. The external memory may include Random Access Memory (RAM) 533. RAM 533 may be a static RAM, battery backed up static RAM, Dynamic RAM (DRAM) or any other suitable technology. The external memory may include Electrically Erasable Programmable Read Only Memory (EEPROM) 535. The external memory may include Flash memory 534. The External memory may include a magnetic storage device such as disc 536. In some embodiments, the external memories may be included in a system.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc. do not preclude a plurality. Reference signs in the claims are provided merely as a clarifying example shall not be construed as limiting the scope of the claims in any way.

## Claims

1. A video apparatus comprising:
a receiver (201) arranged to receive video data for a three dimensional scene;
a generator (203) arranged to generate a plurality of video frames from the video data, each video frame comprising a plurality of independently decodable image regions;
a metadata generator (205) arranged to generate metadata, the metadata including an indication of a set of scene objects for the three dimensional scene;
a video data signal generator (207) arranged to generate a video data signal comprising the plurality of video frames and the metadata;
wherein the metadata generator (205) is further arranged to include at least one link indication in the metadata, each link indication of the at least one link indications linking a scene object to a set of independently decodable image regions of the plurality of independently decodable image regions.

2. The video apparatus of claim 1 wherein the video data signal generator (207) is arranged to include the at least one link indication in a Supplemental Enhancement Information data field of the video data signal.

3. The video apparatus any previous claim wherein the video data signal generator (207) is arranged to include the at least one link indication in a Network Abstraction Layer unit of a Video Coding Layer.

4. The video apparatus of any previous claim wherein the video data signal is an MPEG Immersive Video, MIV, video data signal.

5. The video apparatus of any previous claim wherein the video data signal is an MPEG Visual Volumetric Video-based Coding, V3C, video data signal.

6. The video apparatus of any previous claim wherein the video frames include at least one two dimensional image video frame.

7. The video apparatus of any previous claim wherein the video frames include at least one video atlas.

8. The video apparatus of any previous claim wherein the video data signal generator (207) is arranged to generate the video data signal to include at least one indication indicative of whether a set of link indications provide link indications for link identities of a single video frame or provide link indications for link identities of a plurality of video frames of the plurality of video frames.

9. A video apparatus comprising:
a receiver (301) arranged to receive a video data signal, the video data signal comprising:
video data representing a three dimensional scene, the video data including:
a plurality of video frames, each video frame comprising a plurality of independently decodable image regions,
an indication of a set of scene objects for the three dimensional scene, and
at least one link indication, each link indication of the at least one link indications linking a scene object of the three dimensional scene to a set of independently decodable image regions of the plurality of independently decodable image regions;
an object selection circuit (303) arranged to determine a set of the scene objects;
a video signal generator (305) arranged to generate a modified video signal from the video data, the generation of the second video signal including selecting a subset of the plurality of independently decodable image regions based on the set of the scene objects and the at least one link indication.

10. The video apparatus of claim 9 wherein the video data signal and the modified video signal are object coded video signals.

11. The video apparatus of claim 9 or 10 wherein the video signal generator (305) arranged to include a first independently decodable image regions in the modified video signal if at least one link indication indicates that the first independently decodable image region is linked to a scene object of the set of scene objects and to exclude the first independently decodable image regions from the modified video signal if no link indication indicates that the first independently decodable image region is linked to a scene object of the set of scene objects.

12. A method of generating a video data signal, the method comprising:
receiving video data for a three dimensional scene;
generating a plurality of video frames from the video data, each video frame comprising a plurality of independently decodable image regions;
generating metadata including an indication of a set of scene objects for the three dimensional scene; and
generating a video data signal comprising the plurality of video frames and the metadata;
wherein generating the metadata comprises including at least one link indication in the metadata, each link indication of the at least one link indications linking a scene object to a set of independently decodable image regions of the plurality of independently decodable image regions.

13. A method of generating a modified video signal, the method comprising:
receiving a video data signal, the video data signal comprising:
video data representing a three dimensional scene, the video data including:
a plurality of video frames, each video frame comprising a plurality of independently decodable image regions,
an indication of a set of scene objects for the three dimensional scene, and
at least one link indication, each link indication of the at least one link indications linking a scene object of the three dimensional scene to a set of independently decodable image regions of the plurality of independently decodable image regions;
determining a set of the scene objects; and
generating the modified video signal from the video data, the generation of the second video signal including selecting a subset of the plurality of independently decodable image regions based on the set of the scene objects and the at least one link indication

14. A video data signal comprising:
video data representing a three dimensional scene, the video data including plurality of video frames, each video frame comprising a plurality of independently decodable image regions;
an indication of a set of scene objects for the three dimensional scene, and
at least one link indication, each link indication of the at least one link indication linking a scene object of the three dimensional scene to a set of independently decodable image regions of the plurality of independently decodable image regions.

15. A computer program product comprising computer program code means adapted to perform all the steps of any of the claims 12 or 13 when said program is run on a computer or a video data signal of claim 14.
